# EUROPÄISCHE PATENTSCHRIFT

(11) **EP 1 250 251 B1**
(45) Veröffentlichungstag und Bekanntmachung des Hinweises auf die Patenterteilung: **26.07.2006**
(21) Anmeldenummer: 01996487.3
(22) Anmeldetag: 16.11.2001
(51) Int. Cl.: B62D 1/16, B62D 5/04

(54) **KUPPLUNG FÜR EINE STEER-BY-WIRE-LENKANLAGE**
COUPLING FOR A STEER-BY-WIRE STEERING SYSTEM
EMBRAYAGE POUR UN SYSTEME DE DIRECTION A COMMANDE PAR CABLE (STEER-BY-WIRE)

(30) Priorität: 18.11.2000 DE 10057242
(43) Veröffentlichungstag der Anmeldung: 23.10.2002
(73) Patentinhaber: ROBERT BOSCH GMBH, 70442 Stuttgart (DE); ZF Lenksysteme GmbH, 73522 Schwäbisch Gmünd (DE)
(72) Erfinder: DOMINKE, Peter, 74321 Bietigheim-Bissingen (DE); CAO, Chi-Thuan, 70825 Korntal-Münchingen (DE); PFEIFFER, Wolfgang, 71723 Grossbottwar (DE); LEIMBACH, Klaus-Dieter, 73569 Eschach (DE); HARTER, Werner, 75428 Illingen (DE); HAFERMALZ, Jens, 73116 Wäschenbeuren (DE); KNÖDLER, Helmut, 73547 Lorch (DE); LEUTNER, Wilfried, 73527 Schwäbisch Gmünd (DE); SCHUELE, Juergen, 73525 Schwäbisch Gmünd (DE); LOHNER, Herbert, 71292 Friolzheim (DE)
(86) Internationale Anmeldenummer: PCT/DE2001/004261
(87) Internationale Veröffentlichungsnummer: WO 2002/040336

(56) Entgegenhaltungen:
- EP-A- 0 261 325
- DE-A- 4 330 658
- DE-C- 19 755 044

## Beschreibung

Die Erfindung betrifft eine Steer-by-Wire-Lenkanlage für ein Fahrzeug, mit einer drehfest mit einer Lenksäule verbundenen Lenkhandhabe, mit einem auf die Lenksäule wirkenden Lenkradaktuator, wobei der Lenkradaktuator einen drehfest mit der Lenksäule verbundenen Rotor und einen Stator aufweist.

Steer-by-Wire-Lenkanlagen zeichnen sich dadurch aus, dass im Normalbetrieb keine direkt mechanische Verbindung zwischen Lenkrad und den gelenkten Rädern vorhanden ist. Der Fahrerlenkwunsch wird vielmehr über Drehwinkelsensoren an der Lenksäule erfasst und von einem Steuergerät verarbeitet, welches entsprechende Steuersignale an einen auf die gelenkten Räder des Fahrzeugs wirkenden Lenksteller übermittelt.

Ein Lenkradaktuator simuliert dem Fahrer dabei über ein Moment den Straßenkontakt. Hierfür werden relativ niedrige Momentenniveaus benötigt (ca. 5 Nm). Aus diesem Grund lässt sich der momentenerzeugende E-Motor ohne zusätzliches Übersetzungsgetriebe als Direktantrieb in den Aktuator integrieren. Dadurch wird ein sehr gutes Lenkgefühl mit geringer Momentenschwankung und geringer Geräuschbildung ermöglicht.

Sollen dem Fahrer höhere Momente z.B. durch einen Lenkungsanschlag oder Bordsteinanschlag der Räder simuliert werden, so ist das mit einem solchen E-Motor ohne Getriebe nicht möglich. Da der bei herkömmlichen Lenkungen durch das Lenkgetriebe vorgegebene Lenkanschlag bei Steer-by-Wire-Lenkanlagen keine Begrenzungen der Drehbewegung des Lenkrads bewirkt, ist es notwendig einen gesonderten Lenkanschlag für das Lenkrad bzw. die Lenksäule vorzusehen. Dies ist notwendig, um zu verhindern, dass z.B. eine Wickelfeder in der Lenksäule, welche für die Betätigung der Hupe, das Auslösen eines Airbags und/oder die Betätigung eines Automatikgetriebes erforderlich ist, unzulässig weit verdreht wird. Wenn die Wickelfeder unzulässig weit verdreht wird, nimmt sie Schaden. Auch ein Bordsteinanschlag kann durch die Drehwinkelbegrenzung der Lenksäule simuliert werden.

Darüber hinaus gibt es Steer-by-Wire-Lenkanlagen, die über eine sogenannte Rückfallebene verfügen. Unter Rückfallebene wird im Zusammenhang mit der vorliegenden Erfindung eine konventionelle mechanische Verbindung zwischen Lenkrad und Lenksteller verstanden, die bei Ausfall der Steer-by-Wire-Lenkanlage aktiviert wird. Im Steer-by-Wire-Betrieb ist die mechanische Verbindung zwischen Lenkrad und Lenksteller durch eine lösbare Kupplung getrennt, während zum Aktivieren der Rückfallebene die lösbare Kupplung geschlossen wird.

Aus der DE 43 30 658 Al ist eine mit Klemmkörpern arbeitende Lenkradsperre für Kraftfahrzeuge bekannt.

Der Erfindung liegt die Aufgabe zugrunde, eine Bremseinrichtung für eine Steer-by-Wire-Lenkanlage bereitzustellen, die kompakt baut, kostengünstig herstellbar ist und außerdem im Steer-by-Wire-Betrieb nur die Bremseinrichtung einfach und zuverlässig ansteuerbar sein.

Im Zusammenhang mit der Erfindung unterscheiden sich die Begriffe "Kupplung" und "Bremseinrichtung" dadurch, dass eine Kupplung Drehbewegungen und Drehmomente überträgt, während eine Bremseinrichtung im Sinne der Erfindung nur Drehmoment überrrägt, da ein Teil der Bremseinrichtung drehfest mit dem Fahrzeug verbunden ist.

Diese Aufgabe wird erfindungsgemäß bei einer Steer-by-Wire-Lenkanlage für ein Fahrzeug, mit einer drehfest mit einer Lenksäule verbundenen Lenkhandhabe, mit einem auf die Lenksäule wirkenden Lenkradaktuator, wobei der Lenkradaktuator einen drehfest mit der Lenksäule verbundenen Rotor und einen Stator aufweist, dadurch gelöst, dass eine auf die Lenksäule wirkende Bremseinrichtung vorhanden ist, und dass die Bremseinrichtung in Abhängigkeit des vom Stator auf das Fahrzeug übertragene Drehmoment betätigt wird.

Diese Aufgabe wird erfindungsgemäß auch durch eine Steer-by-Wire-Lenkanlage für ein Fahrzeug, mit einer mit einer Lenksäule verbundenen Lenkhandhabe, insbesondere eines Lenkrads, mit einer einen ersten Abschnitt mit einem zweiten Abschnitt einer Lenksäule kuppelnden Kupplung, mit einem auf die Lenksäule wirkenden Lenkradaktuator, wobei der Lenkradaktuator einen drehfest mit der Lenksäule verbundenen Rotor und einen Stator aufweist, dadurch gelöst, dass die Kupplung in Abhängigkeit des vom Stator auf die Lenksäule übertragenen Drehmoments betätigt wird.

### Vorteile der Erfindung

Mit Hilfe der auf die Lenksäule wirkenden Bremseinrichtung, die in Abhängigkeit des vom Stator auf das Fahrzeug übertragenen Drehmoments betätigt wird, kann auf einfache Weise sichergestellt werden, dass bei Bedarf auch große Drehmomente von der Lenksäule über das Lenkrad an den Fahrer des Fahrzeugs zurückgemeldet werden können. Dies kann bspw. der Fall sein, wenn der Lenkanschlag der Steer-by-Wire-Lenkanlage erreicht ist oder das Fahrzeug mit den gelenkten Rädern gegen eine Bordsteinkante fährt und anderes mehr. In all diesen Situationen ist es ausreichend, ein großes Bremsmament auf die Lenksäule aufzubringen, eine Drehbewegung muss vom Lenkradaktuator bzw. der Bremseinrichtung nicht ausgeführt werden. Dadurch kann auf den Einbau eines Untersetzungsgetriebes im Lenkradaktuator verzichtet werden, was ein sehr gutes Lenkgefühl mit geringer Momentenschwankung und geringer Geräuschbildung ermöglicht.

Bei der Lenkanlage nach dem nebengeordneten Anspruch 2 genügt es die Kupplung zu schließen, so dass die mechanische Rückfallebene aktiviert wird, um das Lenkrad schwergängig zu machen und so dem Fahrer des Fahrzeugs die Empfindung eines "Anschlags", bzw. einer Drehwinkelbegrenzung des Lenkrads zu vermitteln.

Eine Ausführungsform der Erfindung sieht vor, dass die Kupplung nach dem nebengeordneten Anspruch 2 eine Bremseinrichtung im Sinne der Erfindung ist. Dies bedeutet, dass die Ausgangswelle der Kupplung drehfest mit dem Fahrzeug verbunden ist.

Bei einer variante der Erfindung ist vorgesehen, dass die Bremseinrichtung einen schaltbaren Freilauf umfasst, der in einem ersten Schaltzustand für beide Drehrichtungen der Lenksäule einen Freilauf und in einem zweiten Schaltzustand für beide Drehrichtungen eine drehfeste Verbindung von Lenksäule und Fahrzeug bewirkt, dass der Freilauf einen mit dem Fahrzeug drehfest verbundenen Außenring aufweist, dass dem Fahrzeug drehfest verbundenen Außenring aufweist, dass der Außenring konzentrisch zur Lenksäule angeordnet ist, dass von den einander zugewandten Flächen von Außenring und Lenksäule eine erste Fläche zylindrisch ausgebildet ist, während die zweite Fläche einen in Umfangsrichtung zu- und abnehmenden Durchmesser aufweist, dass zwischen dem Außenring und der Lenksäule Klemmkörper angeordnet sind und dass eine Betätigungseinrichtung vorhanden ist, mit der die Klemmkörper relativ zur zweiten Fläche in Umfangsrichtung arretierbar oder verdrehbar sind.

Durch die Ausgestaltung der Bremseinrichtung als schaltbaren Freilauf wird erreicht, dass auf kleinstem Raum große Bremsmomente auf die Lenksäule übertragen werden können. Die Klemmkörper greifen jeder für sich linienförmig an der Lenksäule an und außerdem sind eine Vielzahl von Klemmkörpern über den Umfang der Lenksäule verteilt, so dass keine unzulässig hohen Beanspruchungen der Lenksäule bei aktivierter Bremseinrichtung entstehen. Auch Kerbwirkungen oder anderes mehr sind nicht zu befürchten. Außerdem sind Freiläufe sehr kostengünstig herstellbar.

In weiterer Ergänzung der Erfindung ist vorgesehen, dass die Klemmkörper in einem Käfig geführt werden, dass die Klemmkörper durch in den Käfig integrierte Federelemente bzw. durch den Käfig selbst von der ersten Fläche weggedrückt werden, dass der Stator pendelnd gelagert ist, dass der Käfig und der Stator drehfest miteinander verbunden sind, dass der Rotor des Lenkradaktuators drehfest mit der ersten Fläche verbunden ist, und dass die Drehung des Stators relativ zum Außenring durch mindesten ein auf Stator und Außenring wirkendes Federelement bis zum Erreichen des Auslösemoments verhindert wird. Bei dieser Ausführungsform ist der Lenkradaktuator in die Bremseinrichtung integriert und das vom Lenkradaktuator auf die Lenksäule übertragene Drehmoment wird unmittelbar zum Betätigen der erfindungsgemäßen Bremseinrichtung herangezogen. Diese, rein mechanische, Lösung ist sehr robust und naturgemäß unabhängig von etwa auftretenden Störungen im Steuergerät oder der Versorgungsspannung des Bordnetzes des Fahrzeugs.

Es hat sich als besonders zuverlässig erwiesen, wenn das mindestens eine Federelement sich mit einem ersten Ende gegen den Stator und einen Anschlag des Außenrings und mit einem zweiten Ende gegen den Außenring abstützt.

Bei einer alternativen Ausführungsform kann das Betätigungsglied der Betätigungseinrichtung durch die Kraft einer Feder in Richtung der ersten Fläche'bewegt werden und das Betätigungsglied durch die Kraft eines Hubmagneten in entgegengesetzter Richtung betätigbar sein. Bei dieser Ausführungsform muss der Elektromotor des Lenkradaktuators nicht in die Bremseinrichtung integriert werden, sondern kann an einem anderen Ort an der Lenksäule angreifen. Da bei vielen Bauarten von Elektromotoren der elektrische Strom durch den Motor proportional zu dem von diesem abgegebenen Moment ist, kann ohne gesonderte Momentenmessung immer dann, wenn ein Drehmoment auf die Lenksäule aufgeprägt werden soll, welches der Lenkradaktuator alleine aufzubringen nicht imstande ist, die Betätigungseinrichtung durch Ansteuern des Hubmagneten aktiviert werden kann.

Weitere Vorteile und vorteilhafte Ausgestaltungen der Erfindung sind der Zeichnung, deren Beschreibung und den Patentansprüchen entnehmbar.

### Zeichnung

Es zeigen:
- Fig. 1:: eine schematische Darstellung einer Steer-by-Wire-Lenkanlage mit mechanischer Rückfallebene,
- Fig. 2:: eine schematische Darstellung einer Steer-by-Wire-Lenkanlage ohne mechanische Rückfallebene,
- Fig. 3a:: einen Längsschnitt durch ein erstes Ausführungsbeispiel einer erfindungsgemäßen Kupplung,
- Fig. 3b:: einen Querschnitt entlang der Linie I-I in Fig. 3a,
- Figur 3c:: einen Querschnitt durch eine erfindungsgemäße Kupplung entlang der Linie II-II.
- Figur 4a:: einen Längsschnitt durch ein zweites Ausführungsbeispiel einer erfindungsgemäßen Kupplung,
- Figur 4b:: einen Querschnitt entlang der Linie II-II in Fig. 4a und
- Figur 4c:: einen Querschnitt entlang der Linie I-I.

### Beschreibung der Ausführungsbeispiele

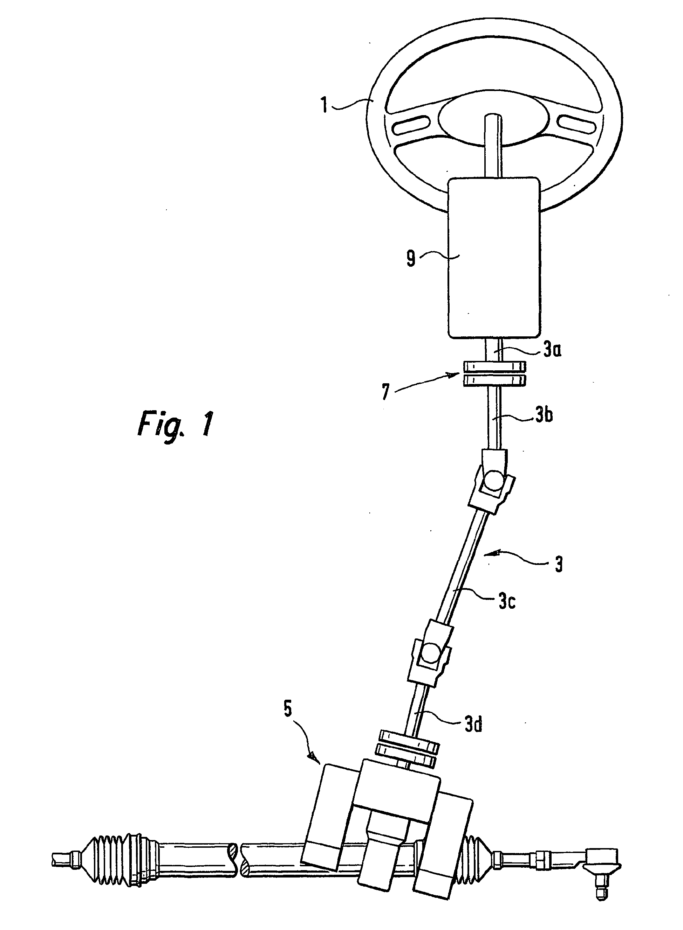

In Figur 1 ist eine Steer-by-Wire-Lenkanlage mit einer mechanischen Rückfallebene schematisch dargestellt. Aufgabe jeder Lenkanlage ist es, den durch Drehen eines Lenkrads 1 geäußerten Lenkwunsch auf die in Figur 1 nicht dargestellten gelenkten Räder des Fahrzeugs zu übertragen. Bei konventionellen mechanischen, hydraulischen oder elektrischen Lenkungen erfolgt diese Übertragung über eine aus mehreren Teilen 3a, 3b, 3c und 3d zusammengesetzte ausgeführten Lenksteller 5, welcher die Drehbewegung der Lenksäule 3 in eine Linearbewegung umsetzt.

Bei einer Steer-by-Wire-Lenkanlage wird die Lenksäule 3 durch eine Kupplung 7 in die Teile 3a und 3b aufgetrennt. Selbstverständlich kann die Kupplung 7 auch an den Teilen 3c und 3d angeordnet sein.

Im Steer-by-Wire-Betrieb, d. h. bei geöffneter Kupplung 7, wird der Fahrerlenkwunsch an dem direkt mit dem Lenkrad 1 verbundenen Teil 3a der Lenksäule von einem in Figur 1 nicht dargestellten Lenkraddrehwinkelsensor aufgenommen und an ein ebenfalls nicht dargestelltes Steuergerät übertragen. Das Steuergerät wiederum steuert den Lenksteller 5 an, welcher auf die nicht dargestellten gelenkten Räder des Fahrzeugs einwirkt.

Im Steer-by-Wire-Betrieb werden Rückwirkungen von der Fahrbahn auf die gelenkten Räder über einen Lenkradaktuator 9 an das Lenkrad 1 übertragen. Für den Fall, dass in der Steer-by-Wire-Lenkanlage ein Fehler erkannt wird, wird die Kupplung 7 geschlossen und die Übertragung des Fahrerlenkwunsches vom Lenkrad 1 auf die gelenkten Räder erfolgt auf konventionelle Weise über die Lenksäule 3 und den Lenksteller 5.

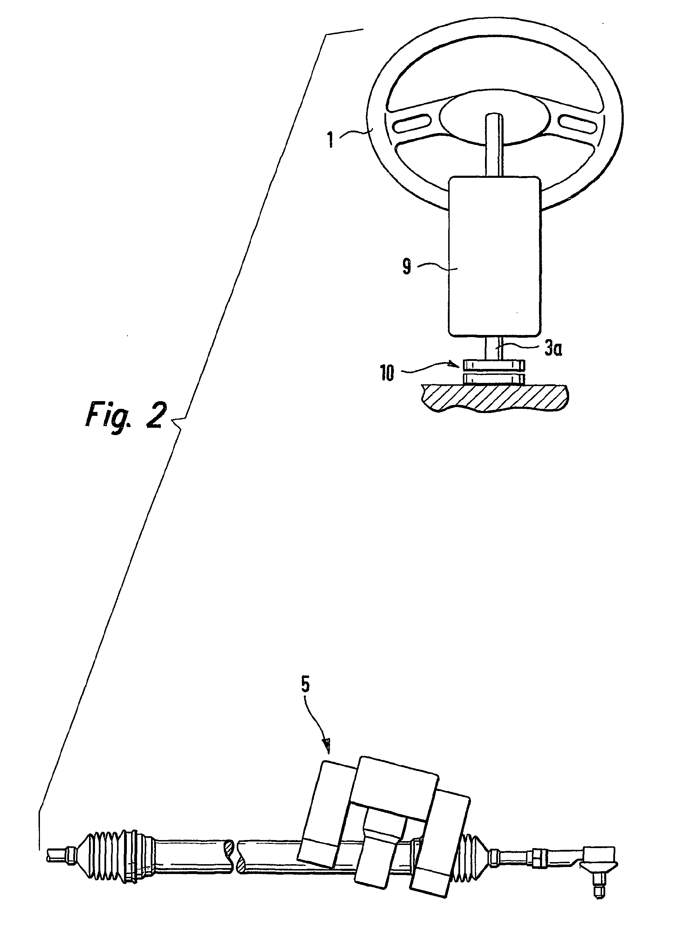

In Figur 2 ist eine Steer-by-Wire-Lenkanlage schematisch dargestellt, bei der keine mechanische Rückfallebene vorhanden ist. Der Lenksteller 5 wird in diesem Fall wie im Steer-by-Wire-Betrieb der Figur 1 angesteuert.

Um den Lenkraddrehwinkel begrenzen zu können, ist an einem Ende der Lenksäule 3 eine erfindungsgemäße Bremseinrichtung 10 vorgesehen. Die Bremseinrichtung 10 ist drehfest mit dem Fahrzeug verbunden. Die Bremseinrichtung 10 dient als Lenkanschlag und zum Blockieren des Lenkrads 1. Wenn das Lenkrad 7, mehrere Umdrehungen in eine Richtung ausgeführt hat, wird die Bremseinrichtung 10 aktiviert und somit ein Weiterdrehen des Lenkrads 1 verhindert. Damit ist die in Figur 2 nicht dargestellte wickelfeder in der Lenksäule 3 wirksam gegen Beschädigungen geschützt. Das Blockieren des Lenkrads 1 kann auch gewünscht sein, wenn das Fahrzeug mit den gelenkten Rädern an eine Bordsteinkante fährt und der Lenkradaktuator 9 kein dementsprechend großes Drehmoment aufbringen kann. Das Blockieren des Lenkrads 1 erfolgt auch, wenn das Fahrzeug außer Betrieb ist, so dass das Lenkrad 1 beim Ein- und Aussteigen dem Fahrer als Halt dienen kann. Darüber hinaus hat das Blockieren des Lenkrads 1 bei abgestelltem Fahrzeug noch die Funktion einer Diebstahlsicherung. Es ist vorteilhaft, wenn die Bremseinrichtung 10 im stromlos<an Zustand geschlossen ist.

Die Bremseinrichtung 10 kann in Abhängigkeit des vom Lenkradaktuator 9 auf die Lenksäule 3 aufgeprägten Drehmoments betätigt werden. Bei manchen Motorenbauarten für Lenkradaktuatoren 9 ist das von diesen abgegebene Drehmoment abhängig vom Stromfluß durch den Motor, so dass über eine Strommesssung das Drehmoment bestimmt werden kann.

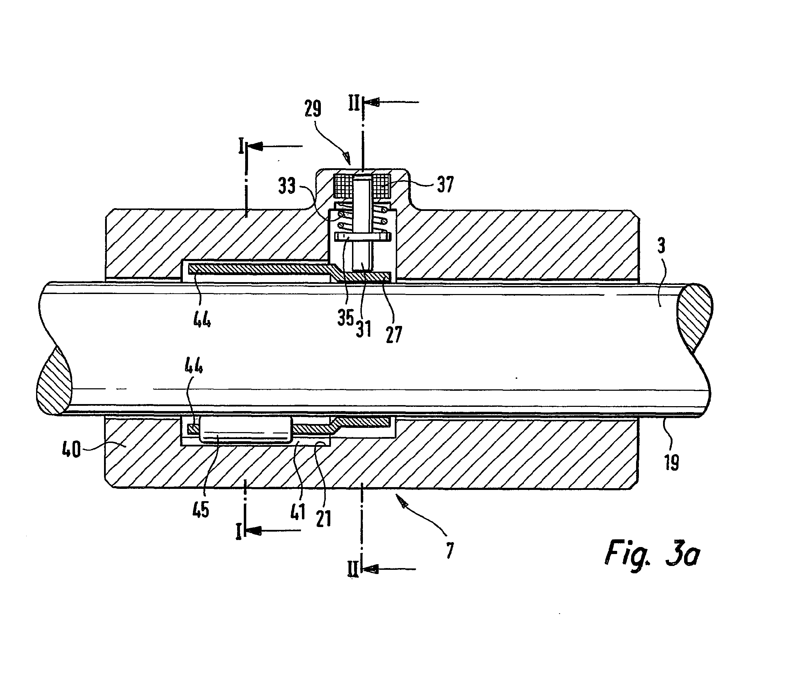

In der Figur 3a ist ein erstes Ausführungsbeispiel einer erfindungsgemäßen Bremseinrichtung 10 im Längsschnitt dargestellt. Koaxial zur Lenksäule 3 ist ein Außenring 40 angeordnet, welcher drehfest mit dem nicht dargestellten Fahrzeug verbunden ist.

Die Lenksäule 3 weist eine zylindrische Außenfläche 19 auf. Zwischen einer Innenfläche 21 des Außenrings 40 und der zylindrischen Außenfläche 19 sind Klemmkörper 45 angeordnet. Die Klemmkörper 45 werden von einem Käfig 44 fixiert.

In dem Außenring 40 ist eine Betätigungseinrichtung 29 angeordnet. Die Betätigungseinrichtung 29 weist ein Betätigungsglied 31 auf, welches als zylindrischer Stift ausgebildet ist. Wenn das Betätigungsglied 31 in Richtung der zylindrischen Außenfläche 19 der Lenksäule 3 bewegt wird, presst es einen Abschnitt 27 des Käfigs 44 auf die zylindrischen Außenfläche 19 der Lenksäule 3, so dass der Käfig 44 die Drehbewegung der Lenksäule 3 annimmt. Sobald der Käfig 44 sich relativ zum Außenring 40 verdreht, werden die Klemmkörper 45 ebenfalls relativ zum Außenring 40 verdreht, wodurch die Bremseinrichtung 10 aktiviert wird.

Das Aktivieren der Bremseinrichtung 10 wird anhand der Figur 3b, welche einen Schnitt entlang der Linie I-I darstellt, erläutert.

Aus der Figur 3b ist ersichtlich, dass die Lenksäule 3 eine zylindrische Außenfläche 19 aufweist, und dass die Innenfläche 21 des Außenrings 40 nicht zylindrisch gestaltet ist. Die Innenfläche 21 weist vielmehr unterschiedliche Radien auf. In Figur 3b sind die Klemmkörper 45 an den Orten des größten Durchmessers der Innenfläche 21 positioniert. In dieser Position berühren die Klemmkörper 45 die Außenfläche 19 der Lenksäule nicht, so dass keine Übertragung von Momenten zwischen Außenring 40 und Lenksäule 3 erfolgt. Die Klemmkörper 45 werden durch den Käfig 44 in der dargestellten Position gehalten. Dabei ist der Käfig 44 entweder selbst so elastisch ausgebildet, dass er die Klemmkörper 45 nach außen drückt oder er weist zusätzliche Federelemente (nicht dargestellt) auf, welche die Klemmkörper 45 nach außen drücken.

Wenn nun, wie im Zusammenhang mit der Figur 3a bereits erläutert, der Käfig 44 durch die Lenksäule 3 mitgenommen wird, dann bewegt der Käfig 44 die Klemmkörper 45 aus der auf der Innenfläche 21 des Außenrings 40 und nähern sich der zylindrischen Außenfläche 19 der Lenksäule 3 bis sie diese schließlich berühren- Sobald sich Außenring 40 und Lenksäule 3 noch weiter relativ zueinander verdrehen, verklemmen die Klemmkörper 45 Außenring 40 und Lenksäule 3. Es entsteht eine drehfeste Verbindung zwischen Außenring 40 und Lenksäule 3- In diesem Zustand, der in Figur 3b nicht dargestellt ist, ist die Bremseinrichtung 10 aktiviert und das Lenkrad 1 blockiert.

Da der Durchmesser der Innenfläche 21 des Außenrings 40 ausgehend von den Orten mit dem größten Durchmesser symmetrisch zu beiden Seiten abnimmt, rückt die Bremseinrichtung 10 unabhängig von der Richtung der Relativdrehung von Außenring 40 und Lenksäule 3 ein, wenn das Betätigungsglied 31 den Abschnitt 27 des Käfigs 44 auf die Lenksäule 3 presst. Ein gewisses Spiel in der Lenksäule 3 bei aktivierter Bremseinrichtung 10 beim Wechsel der Drehrichtung des Lenkrads 1 ist beim Betrieb der Rückfallebene akzeptabel.

Die Funktion der Betätigungseinrichtung 29 wird anhand der Figur 3c näher erläutert. Die Figur 3c ist gegenüber den Figuren 3a und 3b vergrößert dargestellt. In dieser Darstellung ist die Ausgestaltung der Innenfläche 21 des Außenrings 40 besonders deutlich zu erkennen. Durch den unterschiedlichen Abstand zwischen Außenfläche 19 der Lenksäule 3 und der Innenfläche 21 des Außenrings 40 tritt ein Verklemmen der Klemmkörper 45 zwischen Lenksäule 3 und Außenring 40 auf, sobald die Klemmkörper 45 sich aus der in den Figuren 3b und 3c gezeigten Positionen relativ zum Außenring 40 bewegen.

Die Betätigungseinrichtung 29 weist ein Betätigungsglied 31 auf, welches über eine Feder 33 auf den Käfig 44 gepresst wird. Die Feder 33 stützt sich einerseits am Außenring 40 und andererseits an einem Bund 35 des Betätigungsglieds 33 ab. Das Betätigungsglied 31 taucht mit seinem oberen Ende in einen Hubmagneten 37 ein, der als Elektromagnet ausgeführt ist.

Wenn die Bremseinrichtung 10 geöffnet sein soll, wird der Hubmagnet 37 so von einen nicht dargestellten Steuergerät angesteuert, dass er eine der Kraft der Feder 33 entgegenwirkende und vom Betrag her größere Kraft auf das Betätigungsglied 31 ausübt. Im Ergebnis wird das Betätigungsglied 31 somit vom Käfig 44 abgehoben, so dass Eingangswelle 11 und Ausgangswelle 15 sich relativ zueinander verdrehen können.

Sobald das nicht dargestellte Steuergerät den Stromfluss durch den Hubmagneten 37 unterbricht, senkc sich das Betätigungsglied 31 aufgrund der Kraft der Feder 33 auf den Käfig 44 und bewirkt somit eine Aktivierung der erfindungsgemäßen Bremseinrichtung 10.

Die Bremseinrichtung 10 wird immer dann aktiviert, wenn beispielsweise der Lenkradaktuator 9 das erforderliche Drehmoment nicht bereitstellen kann oder wenn das Lenkrad 1 aus anderen Gründen aktiviert werden soll- Wie bereits erwähnt kann der Stromfluß durch den Elektromotor des Lenkradaktuators 9 zur Bestimmung des auf die Lenksäule wirkenden Drehmoments herangezogen werden.

Selbstverständlich ist es auch möglich, die Innenfläche 21 des Außenrings 40 zylindrisch auszugestalten und die Lenksäule 3 mit entsprechenden Klemmflächen zu versehen. Auch diese Ausführungsform ist, da sie nur auf einer geometrischen Umkehr beruht, vom Schutzbereich des Patents umfasst.

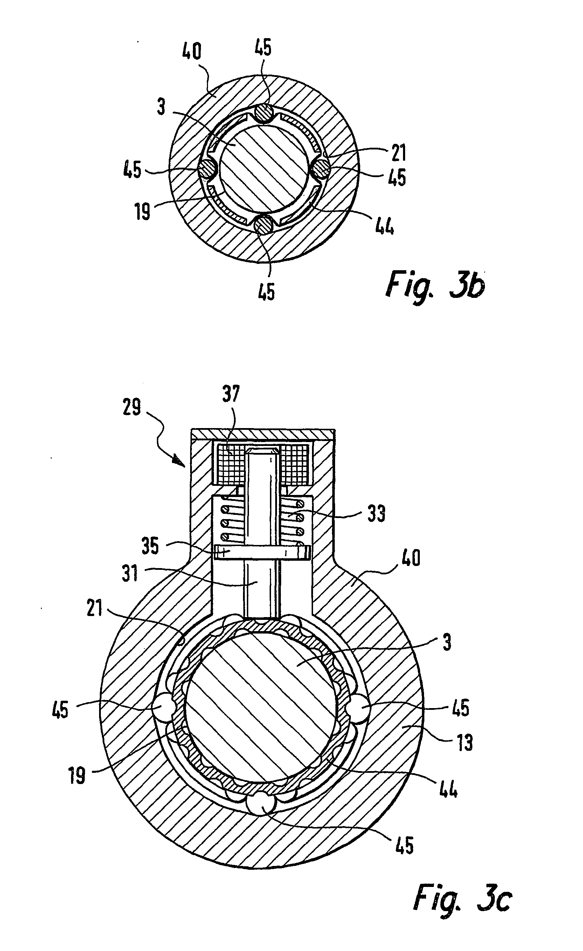

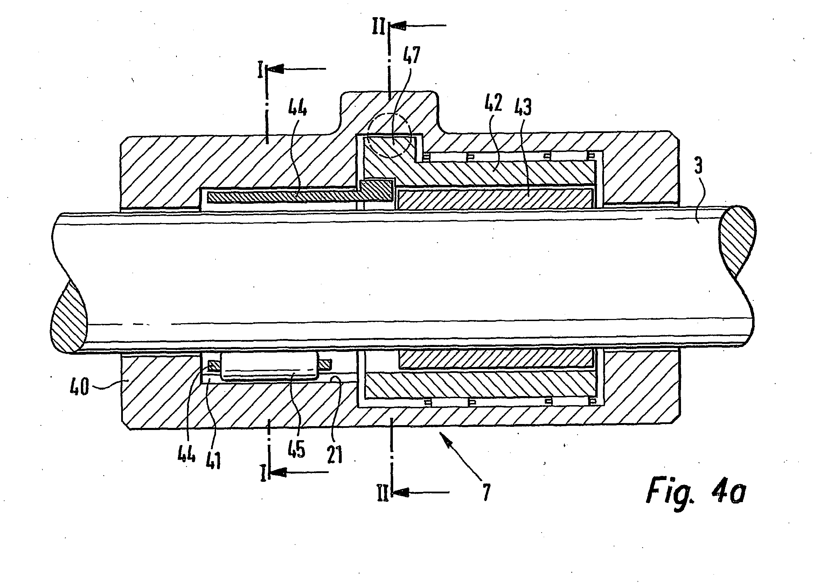

In Figur 4a ist ein zweites Ausführungsbeispiel einer erfindungsgemäßen Bremseinrichtung 10 im Längsschnitt dargestellt. Auch bei diesem Ausführungsbeispiel ist der Außenring 40 drehfest mit dem Fahrzeug (nicht dargestellt) verbunden. Der Außenring 40 weist Klemmflächen 41 auf. Im Außenring 40 ist der Stator 42 des Lenkradaktuators 9 drehbar, bzw. pendelnd, gelagert. Der Rotor 43 des Elektromotors ist drehfest mit der Lenksäule 3 verbunden. Der Käfig 44 der Klemmkörper 45 ragt in den Stator 42 und ist mit diesem drehfest verbunden.

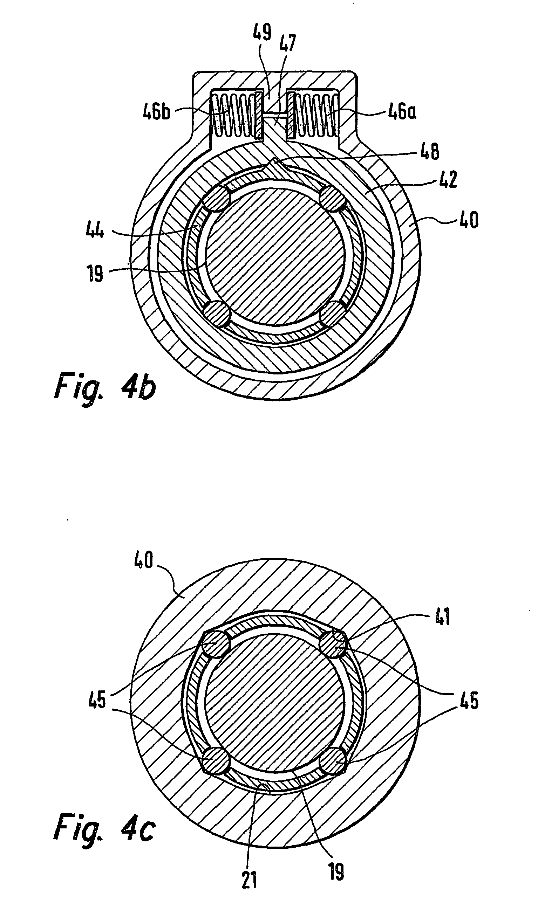

Der Stator 42 ist, wie aus Figur 4b ersichtlich, über Grenzkraftfedern 46a und 46b und einen Absatz 47 am Gehäuse 40 fixiert. Der Käfig 44 wiederum ist z.B. mittels einer Nase 48 mit dem Stator 42 verbunden.

Erzeugt der Lenkradaktuator ein Lenkmoment, so stützt sich das Reaktionsmoment am Stator 42 ab. Übersteigen die aus dem Reaktionsmoment resultierenden Kräfte die Vorspannung der Grenzkraftfedern 46a bzw. 46b, so bewegt sich der Stator 42 relativ zum Gehäuse 40. Die Grenzkraftfedern 46a und 46b stützen sich einenends an einem Vorsprung 47 des Stators 42 und einem Anschlag 49 des Außenrings 40 und anderenends am Außenring 40 ab.

Sobald sich der Stator 42 dreht, wird der Käfig 44 ebenfalls verdreht und die Klemmkörper 45 werden, wie aus Figur 4c ersichtlich, in die Klemmstellung eingerückt. Bei diesem Ausführungsbeispiel wird die Bremseinrichtung 10 in Abhängigkeit des vom Elektromotor abgegebenen Moments geschaltet. Soll beispielsweise ein Lenkanschlag simuliert werden, wird der Elektromotor so angesteuert, dass die aus dem Reaktionsmoment resultierenden Kräfte die Vorspannung der Grenzkraftfedern 46a und b überwinden und die Lenksäule 3 wird blockiert.

Soll das Schalten der als Drehwinkelbegrenzung arbeitenden Kupplung 7 Bremseinrichtung 10 nicht bei einem bestimmten Reaktionsmoment erfolgen, sondern z.B. von einem Steuergerät ausgelöst werden, so kann der Stator 42 in diesem Fall drehfest mit dem Gehäuse 40 verbunden werden (nicht dargestellt). Die Klemmkörper 45 werden federnd in die Klemmflächen 41 gedrückt. Das Betätigen und Einrücken der Kupplung erfolgt wie unter Figur 3c beschrieben.
- 1: Lenkrad
- 3: Lenksäule
- 3a: Abschnitt der Lenksäule Lenksäule
- 3b: Abschnitt der Lenksäule Lenksäule
- 5: Lenkgetriebe
- 7: Kupplung
- 9: Lenkradaktuator

- 19: zylindrische Außenfläche
- 21: Innenfläche

- 27: Bereich

- 29: Betätigungseinrichtung
- 31: Betätigungsglied
- 33: Feder
- 35: Bund
- 37: Hubmagnet

- 40: Außenring
- 41: Klemmfläche
- 42: Stator
- 43: Rotor
- 44: Käfig
- 45: Klemmkörper
- 46a, b: Grenzkraftfeder
- 47: Vorsprung
- 48: Nase
- 49: Anschlag

## Patentansprüche

1. Steer-by-Wire-Lenkanlage für ein Fahrzeug, mit einer mit einer Lenksäule (3) verbundenen Lenkhandhabe, insbesondere eines Lenkrades (1), mit einem auf die Lenksäule (3) wirkenden Lenkradaktuator (9), wobei der Lenkradaktuator (9) einen drehfest mit der Lenksäule (3) verbundenen Rotor (43) und einen drehmomentübertragend mit dem Fahrzeug verbundenen Stator (42) aufweist, **dadurch gekennzeichnet, dass** eine auf die Lenksäule (3) wirkende Bremseinrichtung vorhanden ist, dass sich ein Teil der Bremseinrichtung (40) am Fahrzeug abstützt, und dass die Bremseinrichtung in Abhängigkeit des vom Stator (42) auf die Lenksäule (3) übertragenen Drehmoments betätigt wird.

2. Steer-by-Wire-Lenkanlage für ein Fahrzeug, mit einer mit einer Lenksäule (3) verbundenen Lenkhandhabe, insbesondere eines Lenkrads (1), mit einer einen ersten Abschnitt (3a) mit einem zweiten Abschnitt (3b) einer Lenksäule (3) kuppelnden Kupplung (7), mit einem auf die Lenksäule (3) wirkenden Lenkradaktuator (9), wobei der Lenkradaktuator (9) einen drehfest mit der Lenksäule (3) verbundenen Rotor (43) und einen Stator (42) aufweist, wobei die Kupplung (7) in Abhängigkeit des vom Stator (42) auf die Lenksäule (3) übertragenen Drehmoments betätigt wird.

3. Steer-by-Wire-Lenkanlage nach Anspruch 2, **dadurch gekennzeichnet, dass** eine Ausgangswelle der Kupplung (7) drehfest mit dem Fahrzeug verbunden ist.

4. Steer-by-Wire-Lenkanlage nach Anspruch 2 oder 3, **dadurch gekennzeichnet, dass** die Bremseinrichtung (10) eine Kupplung ist.

5. Steer-by-Wire-Lenkanlage nach einem der vorstehenden Ansprüche, **dadurch gekennzeichnet, dass** die Bremseinrichtung (10) einen schaltbaren Freilauf umfasst, der in einem ersten Schaltzustand für beide Drehrichtungen der Lenksäule (3) einen Freilauf und in einem zweiten Schaltzustand für beide Drehrichtungen eine drehfeste Verbindung von Lenksäule (3) und Fahrzeug bewirkt, dass der Freilauf einen mit dem Fahrzeug drehfest verbundenen Außenring (40) aufweist, dass der Außenring (40) konzentrisch zur Lenksäule (3) angeordnet ist, dass von den einander zugewandten Flächen (19, 21) von Außenring (40) und Lenksäule (3) eine erste Fläche (19) zylindrisch ausgebildet ist, während die zweite Fläche (21) einen in Umfangsrichtung zu- und abnehmenden Durchmesser aufweist, dass zwischen dem Außenring (40) und der Lenksäule (3) Klemmkörper (45) angeordnet sind, und dass eine Betätigungseinrichtung (29, 42) vorhanden ist mit der die Klemmkörper (45) relativ zur zweiten Fläche (21) in Umfangsrichtung arretierbar oder verdrehbar sind.

6. Steer-by-wire-Lenkanlage nach Anspruch 5, **dadurch gekennzeichnet, dass** die Klemmkörper (45) in einem Käfig (44) geführt werden, dass die Klemmkörper (45) durch in den Käfig (44) integrierte Federelemente, bzw. durch den Käfig (44) selbst, von der ersten Fläche (19) weggedrückt werden, dass der Stator (42) pendelnd gelagert ist, dass der Käfig (44) und der Stator (42) drehfest miteinander verbunden sind, dass der Rotor (43) des Lenkradaktuators (9) drehfest mit der ersten Fläche (19) verbunden ist, und dass die Drehung des Stators (42) relativ zum Außenring (40) durch mindestens ein auf Stator (42) und Außenring (40) wirkendes Federelement (46a, 46b) bis zum Erreichen des Auslösemoments verhindert wird.

7. Steer-by-wire-Lenkanlage nach Anspruch 4, **dadurch gekennzeichnet, dass** sich das mindestens eine Federelement (46a, 46b) mit einem ersten Ende gegen den Stator (42) und einen Anschlag (49) des Außenrings (40) und mit einem zweiten Ende gegen den Außenring (40) abstützt.

8. Kupplung nach einem der Ansprüche 2 bis 7, **dadurch gekennzeichnet, dass** ein Betätigungsglied (31) der Betätigungseinrichtung (29) durch die Kraft einer Feder (33) in Richtung der ersten Fläche (19) bewegt wird, und dass das Betätigungsglied (31) durch die Kraft eines Hubmagneten (37) in entgegengesetzter Richtung betätigbar ist.

9. Kupplung nach Anspruch 8, **dadurch gekennzeichnet, dass** der Hubmagnet (37) ein Elektromagnet ist.

10. Lenkanlage nach einem der vorangehenden Ansprüche, **dadurch gekennzeichnet, dass** die Bremseinrichtung betätigt wird, wenn das Lenkrad (1) mehrere Umdrehungen in eine Richtung ausgeführt hat.

11. Lenkanlage nach einem der vorangehenden Ansprüche, **dadurch gekennzeichnet, dass** die Bremseinrichtung zum Blockieren des Lenkrades (1) dient, wenn das Fahrzeug außer Betrieb ist.

12. Lenkanlage nach einem der vorangehenden Ansprüche, **dadurch gekennzeichnet, dass** die Bremseinrichtung durch Blockieren des Lenkrades (1) dazu dient, am Lenkrad (1) eine Begrenzung des Lenkwinkels zu simulieren, die durch einen Bordstein hervorgerufen ist.

## Claims

1. Steer-by-wire steering system for a vehicle, having a steering handle, in particular a steering wheel (1), which is connected to a steering column (3), having a steering-wheel actuator (9) which acts on the steering column (3), the steering-wheel actuator (9) having a rotor (43) which is connected fixedly in terms of rotation to the steering column (3) and a stator (42) which is connected to the vehicle so as to transmit torque, **characterized in that** there is a brake device which acts on the steering column (3), **in that** a part of the brake device (40) is supported on the vehicle, and **in that** the brake device is actuated as a function of the torque which is transmitted from the stator (42) to the steering column (3).

2. Steer-by-wire steering system for a vehicle, having a steering handle, in particular a steering wheel (1), which is connected to a steering column (3), having a clutch (7) which couples a first section (3a) to a second section (3b) of a steering column (3), having a steering-wheel actuator (9) which acts on the steering column (3), the steering-wheel actuator (9) having a rotor (43) which is connected fixedly in terms of rotation to the steering column (3) and a stator (42), the clutch (7) being actuated as a function of the torque which is transmitted from the stator (42) to the steering column (3).

3. Steer-by-wire steering system according to Claim 2, **characterized in that** an output shaft of the clutch (7) is connected fixedly in terms of rotation to the vehicle.

4. Steer-by-wire steering system according to Claim 2 or 3, **characterized in that** the brake device (10) is a clutch.

5. Steer-by-wire steering system according to one of the preceding claims, **characterized in that** the brake device (10) comprises a switchable free wheel which, in a first switching state, brings about free-wheeling for both rotational directions of the steering column (3) and, in a second switching state, brings about a connection of the steering column (3) and the vehicle which is fixed in terms of rotation for both rotational directions, **in that** the free wheel has an outer ring (40) which is connected fixedly in terms of rotation to the vehicle, **in that** the outer ring (40) is arranged concentrically with respect to the steering column (3), **in that**, of the mutually facing surfaces (19, 21) of the outer ring (40) and the steering column (3), a first surface (19) is of cylindrical configuration, while the second surface (21) has a diameter which increases and decreases in the circumferential direction, **in that** clamping bodies (45) are arranged between the outer ring (40) and the steering column (3), and **in that** there is an actuating device (29, 42), with which the clamping bodies (45) can be locked or rotated in the circumferential direction relative to the second surface (21).

6. Steer-by-wire steering system according to Claim 5, **characterized in that** the clamping bodies (45) are guided in a cage (44), **in that** the clamping bodies (45) are pressed away from the first surface (19) by spring elements which are integrated into the cage (44) or by the cage (44) itself, **in that** the stator (42) is mounted in a floating manner, **in that** the cage (44) and the stator (42) are connected to one another fixedly in terms of rotation, **in that** the rotor (43) of the steering-wheel actuator (9) is connected fixedly in terms of rotation to the first surface (19), and **in that** the rotation of the stator (42) relative to the outer ring (40) is prevented by at least one spring element (46a, 46b) which acts on the stator (42) and the outer ring (40) until the release moment is achieved.

7. Steer-by-wire steering system according to Claim 4, **characterized in that** the at least one spring element (46a, 46b) is supported with a first end against the stator (42) and a stop (49) of the outer ring (40), and with a second end against the outer ring (40).

8. Clutch according to one of Claims 2 to 7, **characterized in that** an actuating member (31) of the actuating device (29) is moved in the direction of the first surface (19) by the force of a spring (33), and **in that** the actuating member (31) can be actuated in the opposite direction by the force of a lifting magnet (37).

9. Clutch according to Claim 8, **characterized in that** the lifting magnet (37) is an electromagnet.

10. Steering system according to one of the preceding claims, **characterized in that** the brake device is actuated when the steering wheel (1) has executed a plurality of revolutions in one direction.

11. Steering system according to one of the preceding claims, **characterized in that** the brake device serves to lock the steering wheel (1) when the vehicle is not in operation.

12. Steering system according to one of the preceding claims, **characterized in that** the brake device serves, by locking the steering wheel (1), to simulate a limitation of the steering angle on the steering wheel (1), which limitation is caused by a kerb.

## Revendications

1. Système de direction à commande par câble pour un véhicule, comportant une manette de direction reliée à une colonne de direction (3), en particulier d'un volant (1), un actionneur de volant (9) agissant sur la colonne de direction (3), l'actionneur de volant (9) présentant un rotor (43) solidaire en rotation avec la colonne de direction (3) et un stator (42) relié au véhicule et transmettant un couple
**caractérisé en ce qu'**
un dispositif de freinage agit sur la colonne de direction (3), une partie du dispositif de freinage (40) s'appuie sur le véhicule et le dispositif de freinage est actionné en fonction du couple transmis par le stator (42) sur la colonne de direction (3).

2. Système de direction à commande par câble pour un véhicule, comportant une manette de direction reliée à une colonne de direction (3), en particulier d'un volant (1), un embrayage (7) couplant un premièr segment (3a) à un second segment (3b) d'une colonne de direction (3), un actionneur de volant (9) agissant sur la colonne de direction (3), l'actionneur de volant (9) présentant un rotor (43) solidaire en rotation avec la colonne de direction (3) et un stator (42),
dans lequel l'embrayage (7) est actionné en fonction du couple transmis par le stator (42) sur la colonne de direction (3).

3. Système de direction à commande par câble selon la revendication 2,
**caractérisé en ce qu'**
un arbre de sortie de l'embrayage (7) est solidaire en rotation avec le véhicule.

4. Système de direction à commande par câble selon la revendication 2 ou 3,
**caractérisé en ce que**
le dispositif de freinage (10) est un embrayage.

5. Système de direction à commande par câble selon l'une quelconque des revendications précédentes,
**caractérisé en ce que**
le dispositif de freinage (10) comprend une roue libre embrayable qui dans un premier état d'embrayage agit sur une roue libre pour les deux sens de rotation de la colonne de direction (3) et qui dans un deuxième état d'embrayage, effectue une liaison solidaire en rotation entre la colonne de direction (3) et le véhicule dans les deux sens de rotation, la roue libre présente une bague extérieure (40) solidaire en rotation avec le véhicule, la bague extérieure (40) est concentrique à la colonne de direction (3), avec des surfaces (19, 21) de la bague extérieure (40) et de la colonne de direction (3) tournées l'une vers l'autre, dont une première surface (19) a une forme cylindrique, tandis que la seconde surface (21) présente un diamètre augmentant et diminuant dans la direction périphérique, des corps de serrage (45) sont installés entre la bague extérieure (40) et la colonne de direction (3), et un dispositif d'actionnement (29, 42) permet de bloquer ou de tourner les corps de serrage (45) en direction périphérique par rapport à la seconde surface (21).

6. Système de direction à commande par câble selon la revendication 5,
**caractérisé en ce que**
les corps de serrage (45) sont guidés dans une cage (44), les corps de serrage (45) sont repoussés de la première surface (19) par des éléments élastiques intégrés dans la cage (44) ou par la cage (44) elle-même, le stator (42) est monté oscillant, la cage (44) et le stator (42) sont solidaires en rotation, le rotor (43) de l'actionneur de volant (9) est solidaire en rotation avec la première surface (19), et la rotation du stator (42) par rapport à la bague extérieure (40) est empêchée jusqu'à ce qu'au moins un élément à ressort (46a, 46b) exerce un couple sur le stator (42) et la bague extérieure (40).

7. Système de direction à commande par câble selon la revendication 4,
**caractérisé en ce qu'**
au moins un élément élastique (46a, 46b) s'appuie par une première extrémité contre le stator (42) et une butée (49) de la bague extérieure (40) et par une seconde extrémité contre la bague extérieure (40).

8. Embrayage selon l'une quelconque des revendications 2 à 7,
**caractérisé en ce qu'**
un organe d'actionnement (31) du dispositif d'actionnement (29) est déplacé par la force d'un ressort (33) en direction de la première surface (19), et l'organe d'actionnement (31) peut être actionné par la force d'un électro-aimant de commande (37) dans une direction opposée.

9. Embrayage selon la revendication 8,
**caractérisé en ce que**
l'électro-aimant de commande (37) est un électro-aimant.

10. Système de direction selon l'une quelconque des revendications précédentes,
**caractérisé en ce que**
le dispositif de freinage est actionné, lorsque le volant (1) a réalisé plusieurs rotations dans une direction.

11. Système de direction selon l'une quelconque des revendications précédentes,
**caractérisé en ce que**
le dispositif de freinage destiné à bloquer le volant (1) sert lorsque le véhicule est hors service.

12. Système de direction selon l'une quelconque des revendications précédentes,
**caractérisé en ce que**
le dispositif de freinage par le blocage du volant (1) sert à simuler sur le volant (1) une limitation de l'angle de direction provoquée par une bordure.
